# EUROPÄISCHE PATENTSCHRIFT

(11) **EP 2 434 719 B1**
(45) Veröffentlichungstag und Bekanntmachung des Hinweises auf die Patenterteilung: **06.12.2017**
(21) Anmeldenummer: 11179280.0
(22) Anmeldetag: 30.08.2011
(51) Int. Cl.: H04L 29/06

(54) **Verfahren und Server zum Bereitstellen von Nutzerinformationen**
Server and method for providing user information
Procédé et serveur destinés à la préparation de données utilisateur

(30) Priorität: 23.09.2010 DE 102010041286
(43) Veröffentlichungstag der Anmeldung: 28.03.2012
(73) Patentinhaber: Vodafone Holding GmbH, 40213 Düsseldorf (DE); Bundesdruckerei GmbH, 10969 Berlin (DE)
(72) Erfinder: Byszio-Wegener, Frank, 16348 Wandlitz (DE); Hengels, Erik, 41352 Korschenbroich (DE)
(74) Vertreter: Hohendorf, Carsten

(56) Entgegenhaltungen:
- EP-A1- 1 613 014
- EP-A1- 1 971 161
- EP-A1- 1 975 837
- EP-A2- 1 284 474
- WO-A1-01/80525
- DE-A1- 10 138 381
- DE-A1- 19 911 782
- DE-A1-102004 060 976
- DE-A1-102008 000 067
- DE-C1- 19 722 424
- Anonymous: "One-time password", , 15 September 2010 (2010-09-15), XP055137332, Retrieved from the Internet: URL:http://en.wikipedia.org/w/index.php?ti tle=One-time_password&oldid=384975714 [retrieved on 2014-08-29]

## Beschreibung

Die Erfindung befasst sich mit der elektronischen Bereitstellung von Nutzerinformationen, insbesondere persönlichen Daten, eines Nutzers. Insbesondere betrifft die Erfindung ein Verfahren und eine Servereinrichtung zum Bereitstellen von Nutzerinformationen eines Nutzers sowie ein die Servereinrichtung enthaltendes System.

Sowohl staatliche Stellen als auch private Unternehmen stellen ihren Bürgern bzw. registrierten Kunden zunehmend elektronische Ausweise bereit. Diese ermöglichen eine sichere elektronische Übermittlung von Nutzerinformationen über das Internet oder ein anderes Netzwerk an einen netzwerkbasierten elektronischen Dienst. Hierbei kann es sich sowohl um den Dienst einer staatlichen Behörde handeln, wie beispielsweise die elektronische Einreichung einer Steuererklärung, oder den Dienst eines privaten Unternehmens.

Die elektronischen Ausweise sind in der Regel kontaktbehaftete (drahtgebunden auslesbare) oder kontaktlose (drahtlos auslesbare) Chipkarten, welche Nutzerinformationen enthalten sowie kryptografische Informationen, wie etwa eine digitale Signatur des Nutzers. Die kryptografischen Informationen können dazu verwendet werden, die Authentizität der Nutzerinformationen zu prüfen. Im Fall einer digitalen Signatur kann dies beispielsweise mittels eines oder mehrerer digitaler Zertifikate vorgenommen werden.

Auf netzwerkbasierte Dienste greifen Nutzer unter Verwendung von Kommunikationsendgeräte zu, die mit dem Netzwerk verbunden sind. Als Kommunikationsendgeräten werden beispielsweise Personal Computer (PC) oder mobile Endgeräte verwendet. Um einen elektronischen Ausweis zur Identifikation gegenüber dem elektronischen Dienst oder zu anderen Zwecken zu verwenden, werden die enthaltenen Nutzerinformationen über das verwendete Kommunikationsgerät an den elektronischen Dienst übermittelt. Hierzu muss das Kommunikationsendgerät zumindest über einen an den Typ der Karte angepassten Kartenleser zum Auslesen des elektronischen Ausweises verfügen oder mit einem solchen verbunden werden. Zudem ist oftmals eine Software erforderlich, welche das Auslesen der Nutzerinformationen und ihre Übermittlung an den elektronischen Dienst steuert.

Die Erforderlichkeit des Kartenlesers und ggf. der Software verhindern oftmals den Einsatz von elektronischen Ausweisen. So sind beispielsweise Kartenlesegeräte insbesondere für kontaktlose Chipkarten nicht sehr weit verbreitet. Die Software ist aufgrund der erforderlichen Sicherheitsstufe in der Regel sehr komplex, wodurch Installation und Betrieb aufwändig sein können.

DE 101 38 381 A1 beschreibt ein Verfahren bei dem eine Verbindung zwischen einem Client und einem Server hergestellt und eine Datenanforderung an den Server vom Client übermittelt wird. Um die Datenanforderung zu authentifizieren, sendet der Nutzer von seinem Mobiltelefon eine Textnachricht mit seiner Telefonkennung an den Server. Wenn die gespeicherte Kennung mit der gesendeten übereinstimmt, erhält der Nutzer Zugriff auf den Server und der Server gibt den Zugriff auf die Daten an den Client frei, d.h. der Nutzer kann die Daten herunterladen.

DE 199 11 782 A1 beschreibt ein Verfahren zur Nutzung von Bankdienstleistungen über Mobilfunk, das auf dem HBCI-Verfahren basiert. Dabei wird ein HBCI-Gateway zwischen einem Bankenserver und einer Mobilstation beziehungsweise kundenseitig verwendeten SIM-Karte eingesetzt. Das Gateway wandelt das vom Bankenserver genutzte HBCI-Protokoll für die Mobilstation bzw. SIM-Karte in ein verträgliches Protokoll um und reduziert somit die zu übertragenden Daten auf ein dem GSM-Standard kompatibles Maß. Kommunikationsendgerät und Bankenserver kommunizieren jeweils direkt mit dem HBCI-Gateway-Server. Die SIM-Karte übernimmt mit Hilfe des SIM Application Toolkits den Benutzerdialog.

DE 10 2004 060 976 A1 offenbart ein Verfahren zur Authentisierung eines Nutzers und zur Generierung einer mTAN auf einem Kommunikationsendgerät nachdem sich ein Nutzer bei einem Anbieter eines Datenkommunikationssystems und - verfahrens registriert hat. Bei diesem Verfahren wird mit Hilfe einer ersten Kennung, die von einer zentralen Servereinrichtung auf das mobile Endgerät gesendet wird, eine zweite Kennung, insbesondere eine mTan-Kennung, mit Hilfe eines Applets auf dem mobilen Endgerät erzeugt. Diese zweite Kennung kann dann auf einem weiteren Endgerät wie z.B. eine Rechnereinheit verwendet werden.

EP 1 613 014 A1 beschreibt ein Computersystem und ein Verfahren zum Zugreifen auf einen Web-Service mittels des HBCI-Protokolls. Dabei wird eine Datenanfrage von einem Client an einen Server über das öffentliche Netz übertragen und dann von einer Recheneinrichtung mit Hilfe des HBCI-Protokolls sicher und verschlüsselt als HBCI-Nachricht eingebettet in einem SOAP-Paket an den Web Service übertragen.

DE 10 2008 000067 A1 beschreibt ein System, welches das Lesen eines oder mehrerer der in einem ID-Token gespeicherten Attribute durch ein erstes Computersystem ermöglicht, wobei die Verbindung zwischen dem ID-Token und dem ersten Computersystem über ein Netzwerk aufgebaut werden kann. Bei dem zumindest einem Attribut kann es sich um eine Angabe bezüglich der Identität des dem ID-Token zugeordneten Nutzers handeln, insbesondere bezüglich dessen so genannter digitaler Identität. Beispielsweise werden durch das erste Computersystem die Attribute Name, Vorname und Adresse gelesen, um diese Attribute an ein zweites Computersystem, zum Beispiel eines Online-Dienstes, weiterzuleiten.

Es ist eine Aufgabe der vorliegenden Erfindung, die sichere Bereitstellung von Nutzerinformationen insbesondere im Hinblick auf die vom Nutzer benötigte Hardware zu vereinfachen.

Die Aufgabe wird gelöst durch ein Verfahren mit den Merkmalen des Anspruchs 1 und durch eine Servereinrichtung mit den Merkmalen des Anspruchs 8. Ausgestaltungen des Verfahrens und der Servereinrichtung sind in den abhängigen Ansprüchen angegeben.

Gemäß einem ersten Aspekt wird ein Verfahren nach Anspruch 1 vorgeschlagen. Gemäß einem weiteren Aspekt schlägt die Erfindung eine Servereinrichtung gemäß Anspruch 8 vor. Ein Vorteil der Erfindung besteht darin, dass der Nutzer mittels seines Kommunikationsendgeräts nicht die Nutzerinformationen selbst an die verwendende Einrichtung übermitteln muss, sondern dass er lediglich eine Freigabemeldung an eine Servereinrichtung sendet, welche die Nutzerinformationen dann für die verwendende Einrichtung bereitstellt. Hierdurch benötigt der Nutzer keine Hardware, um die Nutzerinformationen zu speichern und/oder auszulesen bzw. an die verwendende Einrichtung zu übermitteln. Bei der verwendenden Einrichtung kann es sich um eine Servereinheit oder eine andere Computereinheit handeln, die einen von dem Nutzer genutzten Dienst oder eine andere von dem Nutzer genutzte Anwendung bereitstellt.

Bei den in der Servereinrichtung gespeicherten Nutzerinformationen kann es sich um Kopien von Nutzerinformationen handeln, die in einem elektronischen Ausweis des Nutzers gespeichert sind. Somit kann der Nutzer persönliche Daten und/oder andere Nutzerinformationen, die in seinem elektronischen Ausweis hinterlegt sind, für die verwendende Einrichtung bereitstellen, ohne den elektronischen Ausweis auslesen zu müssen.

Diesbezüglich sieht eine Ausgestaltung vor, dass die Nutzerinformationen zur Speicherung von einem elektronischen Ausweis des Nutzers zu der Servereinrichtung übertragen werden. Hierzu ist es erforderlich, den elektronischen Ausweis auszulesen. Die Übertragung braucht jedoch nur einmalig vorgenommen zu werden. Danach stehen die Nutzerinformationen bzw. deren Kopien in der Servereinrichtung zur Verfügung und können bei nachfolgenden Zugriffen des Nutzers auf eine verwendende Einrichtung mehrmals an eine solche übermittelt werden. Ein Vorteil einer derartigen Registrierung besteht insbesondere darin, dass sie in einfacher Weise mithilfe des elektronischen Ausweises online vorgenommen werden kann. Aufwendige Verfahren zur Nutzeridentifikation sind nicht erforderlich.

In einer verbundenen Ausgestaltung enthält der elektronische Ausweis eine Vielzahl von Nutzerinformationselementen, und im Zusammenhang mit der Übertragung der Nutzerinformation an die Servereinrichtung wird eine Auswahl der übertragenen Nutzerinformationselemente aus den im Ausweis enthaltenen Nutzerinformationen vorgenommen. Es ist ein Vorteil dieser Ausgestaltung, dass nicht alle in dem elektronischen Ausweis enthaltenen Nutzerinformationselemente auch in der Servereinrichtung gespeichert werden müssen. Vielmehr kann der Nutzer eine Auswahl vornehmen und so beispielsweise von ihm als besonders sensibel angesehene Nutzerinformationselemente von der Übertragung an die Servereinrichtung ausnehmen. Hierdurch wird der Datenschutz verbessert.

Eine weitere Ausführungsform zeichnet sich dadurch aus, dass die Freigabemeldung von dem Kommunikationsendgerät aufgrund einer Freigabeanforderung gesendet wird, die von der Servereinrichtung an das Kommunikationsendgerät übertragen wird. Die Übertragung erfolgt vorzugsweise dann, wenn eine verwendende Einrichtung Nutzerinformationen des Nutzers von der Servereinrichtung anfordert. Somit kann die Servereinrichtung den Nutzer bedarfsweise zur Freigabe der Bereitstellung seiner Benutzerinformation auffordern. Die Übertragung der Freigabeanforderung kann direkt von der Servereinrichtung an das Kommunikationsgerät erfolgen oder über eine oder mehrere Einheiten. Gleiches gilt auch für die Freigabemeldung, die direkt von dem Kommunikationsendgerät des Nutzers an die Servereinrichtung übermittel werden kann oder über eine oder mehrere weitere Einrichtungen. Die weiteren Einrichtungen können beispielsweise Sicherheitsaufgaben wahrnehmen. Insbesondere können die weiteren Einrichtungen kryptographische Prozesse und/oder Schlüssel zur Absicherung der Kommunikation mit dem Kommunikationsendgerät enthalten, welche in der Servereinrichtung nicht vorliegen.

In einer Ausführungsform ist vorgesehen, dass die Freigabeanforderung unter Verwendung einer dem Kommunikationsendgerät zugeordneten Kennung an dieses übermittelt wird, wobei die Kennung von der verwendenden Einrichtung an die Servereinrichtung übermittelt wird. An der verwendenden Einrichtung kann beispielsweise der Nutzer die Kennung eingeben, so dass die verwendende Einrichtung die Nutzerinformation unter Verwendung der Kennung von der Servereinrichtung anfordern kann. Bei der Kennung kann es sich um eine Rufnummer, insbesondere um eine Mobile Subscriber Integrated Services Digital Network Number (MSISDN), handeln oder um eine andere Kennung, welche in dem Kommunikationsnetz die Adressierung von Nachrichten an das Kommunikationsendgerät ermöglicht.

An der verwendenden Einrichtung stellt der Nutzer die Kennung vorzugsweise aufgrund einer Aufforderung der Einrichtung bereit. Darüber hinaus liegt die Kennung vorzugsweise auch in der Servereinrichtung vor, um den Nutzer bzw. die ihm zugeordneten Nutzerinformationen zu identifizieren, wenn eine Anforderung zur Bereitstellung der Nutzerinformationen unter Angabe der Kennung von der verwendenden Einrichtung erhalten wird. In der Servereinrichtung ist daher vorzugsweise die dem Kommunikationsendgerät des Nutzers zugeordnete Kennung in Verbindung mit den Nutzerinformationen gespeichert.

Eine Weiterbildung sieht vor, dass die Freigabemeldung in Abhängigkeit von einem Ergebnis einer Prüfung eines Authentisierungsmerkmals übertragen wird, welches der Nutzer an dem Kommunikationsendgerät eingibt. Hierdurch wird verhindert, dass ein unberechtigter Dritter das Kommunikationsendgerät des Nutzers dafür verwendet, eine Freigabemeldung zu erzeugen und an die Servereinrichtung zu übertragen. Das Authentisierungsmerkmal ist vorzugsweise nur dem Nutzer des Kommunikationsendgeräts bzw. dem Besitzer des elektronischen Ausweises bekannt und kann beispielsweise als eine persönliche Identifikationsnummer (PIN) ausgestaltet sein.

Darüber hinaus zeichnet sich eine Ausführungsform dadurch aus, dass die Freigabemeldung in einer gesicherten Identifikationskarte erstellt wird, die lösbar in das Kommunikationsendgerät eingesetzt ist. In der Identifikationskarte wird vorzugsweise auch das von dem Nutzer am Kommunikationsendgerät eingegebene Authentisierungsmerkmal überprüft.

Darüber hinaus empfängt die Identifikationskarte auch die Freigabeanforderung und erstellt aufgrund des Empfangs die Freigabemeldung. Die Freigabeanforderung kann innerhalb des Endgeräts transparent, d.h. unsichtbar für den Benutzer, zu der Identifikationskarte geleitet werden. Gleichfalls kann die Freigabemeldung transparent abgesendet werden. Hierdurch wird die Sicherheit weiter erhöht, da die Manipulationsmöglichkeiten aufgrund der Transparenz verringert werden.

Um die Sicherheit weiter zu erhöhen, ist vorzugsweise vorgesehen, dass der Absender der Freigabeanforderung, bei dem es sich um die Servereinrichtung oder eine der zuvor genannten weiteren Einrichtungen handelt, in der Identifikationskarte authentisiert wird, wenn die Freigabeanforderung erhalten wird. Gleichfalls ist vorgesehen, dass die Servereinrichtung oder eine der zuvor genannten weiteren Einrichtungen die Identifikationskarte als Absenderin der Freigabemeldung authentisiert, wenn diese empfangen wird. Hierdurch wird verhindert, dass gefälschte Freigabeanforderungen von unberechtigten Dritten gesendet werden können und dass unberechtigte Dritte gefälschte Freigabemeldungen übertragen.

Die Identifikationskarte ist vorzugsweise als Chipkarte ausgestaltet und beinhaltet zudem Daten bzw. Funktionen, um den Nutzer oder eine ihm zugeordnete Berechtigung in einem Mobilfunknetz zu identifizieren und/oder zu authentisieren. Insbesondere kann es sich bei der Identifikationskarte um eine Subscriber Identification Module (SIM)-Karte oder eine Chipkarte mit einem Universal Subscriber Identification Module (USIM) handeln. Derartige Identifikationskarten sind üblicherweise standardmäßig in Kommunikationsendgeräten vorhanden und verfügen über eine spezielle Sicherheitsarchitektur zum Schutz der darin gespeicherten Identifizierungs- und/oder Authentisierungsdaten. Vorteilhaft können derartige Identifikationskarten im Rahmen der vorliegenden Erfindung auch dazu verwendet werden, die Bereitstellung von Nutzerinformationen auf sichere Weise freizugeben.

Eine Beispiel für eine weitere Einrichtung mit den zuvor genannten Funktionen, die zusammen mit einer Identifikationskarte der zuvor genannten Art eingesetzt werden kann, ist ein Over the Air (OTA)-Server des der Identifikationskarte zugeordneten Heimatmobilfunknetzes. Der OTA-Server kann in der Identifikationskarte authentisiert werden und kann seinerseits die Identifikationskarte authentisieren. Hierzu können kartenspezifische Merkmale, insbesondere kryptografische Schlüssel, in dem OTA-Server verbunden sein. Um die Freigabeanforderung und die Freigabemeldung über den OTA-Server zu übertragen, kann dieser mit der Servereinrichtung verbunden sein. So kann zur sicheren Freigabe der Bereitstellung von Nutzerinformationen auf den mittels des OTA-Servers implementierten OTA-Mechanismus zurückgegriffen werden, der in vielen Mobilfunksystemen bereits realisiert ist.

Auf den von der verwendenden Einrichtung bereitgestellten Dienst kann der Nutzer mittels des Kommunikationsendgeräts zugreifen In einer alternativen Ausgestaltung ist vorgesehen, dass mittels einer anderen Nutzereinrichtung als dem Kommunikationsendgerät auf den von der verwendenden Einrichtung bereitgestellten Dienst zugegriffen wird. Auch in diesem Fall kann jedoch das Kommunikationsendgerät zur Freigabe der Bereitstellung von Nutzerinformationen verwendet werden. Insbesondere kann dadurch von der durch das Kommunikationsendgerät bereitgestellten und die Identifikationskarte umfassenden sicheren Umgebung profitiert werden. Bei der Nutzereinrichtung handelt es sich insbesondere um eine Computereinrichtung.

Neben dem Verfahren und der Servereinrichtung schlägt die Erfindung zudem ein System nach Anspruch 9 vor. Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden. Von den Figuren zeigt:
- Fig. 1: eine schematische Darstellung eines Systems mit einer Servereinrichtung, zu der Kopien von Nutzerinformationen aus einem elektronischen Ausweis übermittelt werden,
- Fig. 2: eine schematische Darstellung eines Systems, in dem die Servereinrichtung die Nutzerinformationen für eine einen Dienst zur Verfügung stellende Servereinheit bereitstellt und
- Fig. 3: eine schematische Darstellung von Schritten zur Bereitstellung der in der Servereinheit gespeicherten Nutzerinformationen.

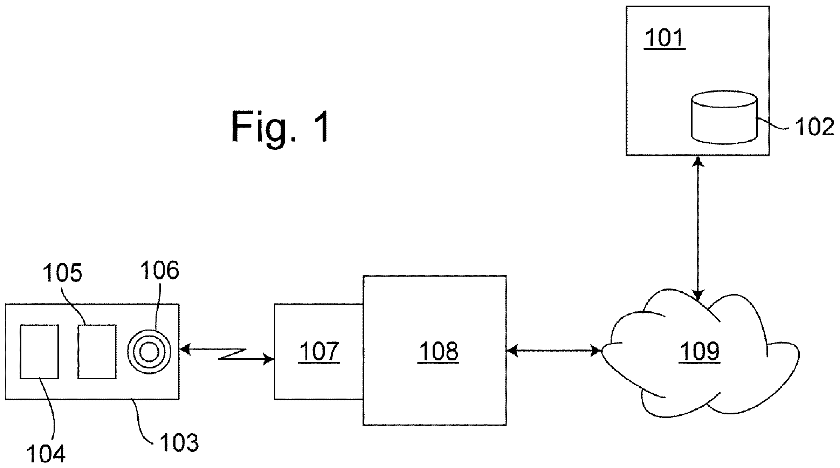

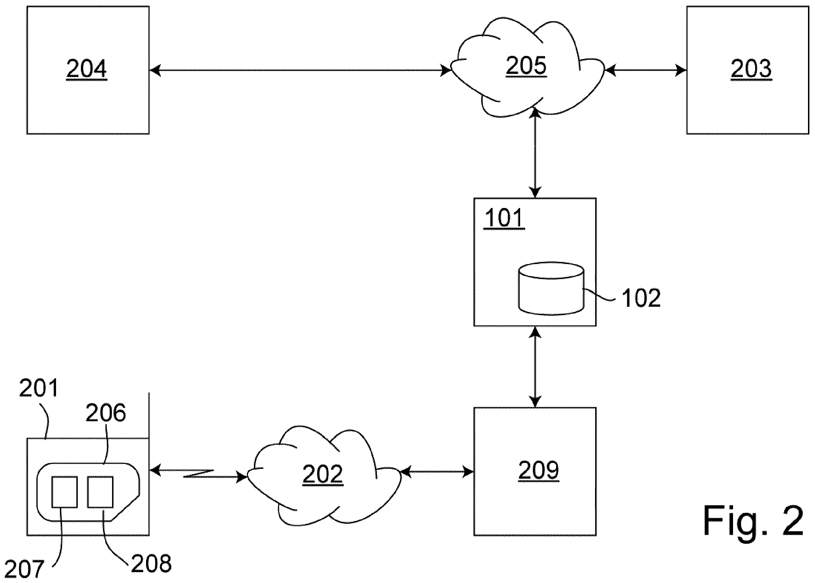

In den Figuren 1 und 2 ist schematisch eine Servereinrichtung 101 gezeigt, in der Nutzerinformationen gespeichert und bei Bedarf zur Verwendung durch einen elektronischen Dienst bereitgestellt werden können. Die Nutzerinformationen sind wenigstens einem Nutzer zugeordnet, vorzugsweise speichert die Servereinrichtung 101 jedoch Nutzerinformationen einer Vielzahl von Nutzern. Zur Speicherung der Nutzerinformationen verfügt die Servereinrichtung 101 über eine Datenbank 102. Da es sich bei den Nutzerinformationen um sensible Daten handeln kann, ist die Datenbank 102 in besonderer Weise gegen das unbefugte Auslesen der Nutzerinformationen gesichert.

In einer Ausführungsform sind die in der Datenbank 102 gespeicherten Nutzerinformationen eines Nutzers sind ebenfalls in einem elektronischen Ausweis 103 des Nutzers gespeichert und werden von dem Ausweis 103 in die Datenbank 102 kopiert. Der elektronische Ausweis 103 ist in einer Ausgestaltung eine Chipkarte, die über einen Speicher 104 verfügt, in dem die Nutzerinformationen hinterlegt sind. Der Speicher 104 ist mit einem Mikroprozessor 105 verbunden, der Zugriffe auf den Speicher 104 steuert. Der Mikroprozessor 105 besitzt eine Programmierung, die das unbefugte Manipulieren und/oder Auslesen von Daten verhindert. Der Speicher 104 und der Mikroprozessor 105 verfügen zudem über eine besonders gesicherte Hardwarearchitektur, die weiteren Schutz gegen ein unbefugtes Auslesen und/oder Manipulieren der Nutzerinformationen bietet.

Die Nutzerinformationen umfassen persönliche Daten des Besitzers des elektronischen Ausweises 103, wie beispielsweise Name, Anschrift, weitere Kommunikationsadressen, ggf. biometrische Daten sowie die Steuernummer oder dergleichen. Die unterschiedlichen Daten werden hierzu auch als Nutzerinformationselemente bezeichnet. Zum Schutz der Nutzerinformationen ist insbesondere ein beispielsweise als PIN ausgestaltetes Authentisierungsmerkmal vorgesehen, welches nur dem Besitzer des Ausweises 103 bekannt sein sollte. Bei einem Zugriff auf die Nutzerinformationen wird das Authentisierungsmerkmal von dem Besitzer eingegeben und vom Mikroprozessor 105 des Ausweises 103 überprüft. Der Zugriff auf die Nutzerinformationen wird nur nach erfolgreicher Prüfung des Authentisierungsmerkmals freigegeben. Die Eingabe des Authentisierungsmerkmals erfolgt beispielsweise über ein externes Gerät, mit dem auch die Nutzerinformationen ausgelesen werden.

Darüber hinaus verfügt der elektronische Ausweis 103 über eine Schnittstelle 106 zur Kommunikation mit externen Geräten. In einer Ausgestaltung ist der elektronische Ausweis als eine kontaktbehaftete Chipkarte ausgestaltet. In diesem Fall umfasst die Schnittstelle elektronische Kontakte, welche die Kommunikation mit einem externen kontaktbehafteten Kartenleser 107 bzw. einem mit dem Kartenleser 107 verbundenen externen Gerät ermöglichen.

In einer weiteren Ausgestaltung ist der elektronische Ausweis 103 eine kontaktlose Chipkarte. Die Schnittstelle 106 ist in diesem Fall als eine Funkschnittstelle ausgestaltet, die dazu in der Lage ist, drahtlos mit externen kontaktlosen Kartenlesern zu kommunizieren. Die drahtlose Kommunikation ist vorzugsweise auf kurze Reichweiten beschränkt, wodurch die Sicherheit erhöht wird. Insbesondere kann die Schnittstelle 106 als eine NFC-Schnittselle ausgestaltet sein, die eine drahtlose Kommunikation mit externen NFC-fähigen Lesegeräten ermöglicht (NFC: Near Field Communication). Die Schnittstelle 106 kann passiv arbeiten, d.h. sie generiert selbst kein elektromagnetisches Feld, sondern moduliert das Feld des externen Lesegeräts 107, um Daten an dieses zu übermitteln. Das Feld des externen Lesegeräts 107 kann in diesem Fall auch den Mikroprozessor 105 und den Speicher 104 mit Energie versorgen, so dass der elektronische Ausweis nicht über eine eigene Energiequelle zu verfügen braucht.

Bei dem elektronischen Ausweis 103 kann es sich um einen Personalausweis oder einen anderen Identifikationsnachweis handeln, der von einer staatlichen Stelle an den Nutzer bzw. Besitzer ausgegeben wird. Gleichfalls kann es sich um einen elektronischen Ausweis 103 handeln, der von einem privaten Unternehmen ausgegeben und von seinem Besitzer verwendet werden kann, wenn er auf Dienste des Unternehmens zugreift.

Die Nutzerinformationen aus dem elektronischen Ausweis 103 können über Terminals 109 und ein Netzwerk 108, wie beispielsweise das Internet, an Dienste übermittelt werden, die von Servereinheiten bereitgestellt werden, insbesondere an sogenannte Webdienste. Die Terminals 109 sind jeweils mit einem Kartenleser 107 verbunden, um mit dem elektronischen Ausweis 103 kommunizieren zu können, oder enthalten derartige Kartenleser 107. Über das Netzwerk 108 können die Terminals 109 mit den Servereinheiten verbunden werden. Um Daten aus dem elektronischen Ausweis 103 auszulesen und an die Servereinheiten zu übermitteln, verfügt das Terminal 109 über eine Software, die insbesondere auf den Kartenleser 107 zugreift und mit entsprechender Software der Servereinheiten kommunizieren kann. Die Software wird im Folgenden als Ausweissoftware bezeichnet.

Beispiele für Dienste, die in Verbindung mit dem elektronischen Ausweis 103 genutzt werden können, sind Onlinedienste von Behörden, wie etwa die elektronische Einreichung von Steuererklärung, sowie Webdienste privater Unternehmen, die eine sichere Nutzeridentifikation verlangen. Wie zuvor erläutert, können für unterschiedliche Dienste bzw. von unterschiedlichen Anbietern verschiedene elektronische Ausweise 103 ausgegeben werden. Die Ausweissoftware der Terminals 109 ist vorzugsweise an den elektronischen Ausweis 103 angepasst. Um unterschiedliche Ausweise 103 in Verbindung mit demselben Terminal 109 verwenden zu können, kann das Terminal 109 in diesem Fall mit den verschiedenen, den einzelnen Ausweisen 103 zugeordneten Softwareprogrammen ausgestattet werden.

Um die im elektronischen Ausweis 103 eines Besitzers gespeicherten Nutzerinformationen in die Datenbank 102 zu kopieren, wird in einer Ausgestaltung eines der zuvor beschriebenen Terminals 109 verwendet, das über das Netzwerk 108 mit der Servereinrichtung 101 verbunden ist. Wenn der Besitzer des elektronischen Ausweises 103 selbst nicht über ein solches Terminal 109 verfügt, kann er ein Terminal 109 verwenden, welches beispielsweise von dem Betreiber der Servereinrichtung 101, von der Ausgabestelle des elektronischen Ausweises 103 bzw. dem ausgebendem Unternehmen oder von einem weiteren Dritten bereitgestellt wird.

Die Servereinrichtung 101 stellt vorzugsweise einen Dienst, insbesondere einen Webdienst, bereit, über den die Nutzerinformationen zur Speicherung in der Datenbank 102 an die Servereinrichtung 101 übertragen werden. Der Dienst kann mittels des Terminals 109 beispielsweise über eine von der Servereinrichtung 101 bereitgestellte Webseite von dem Nutzer des Terminals 109 aufgerufen werden.

Nach dem Aufruf des Dienstes sendet die Servereinrichtung 101 eine Anforderung zur Übermittlung von Nutzerinformationen an das Terminal 109. Im Terminal 109 wird die Anforderung von der Ausweissoftware bearbeitet, welche die Anforderung innerhalb des Terminals 109 empfängt. Nach dem Empfang der Anforderung wird der Nutzer des Terminals 109, bei dem es sich um den Besitzer des elektronischen Ausweises 103 handelt, dazu aufgefordert, das Authentisierungsmerkmal einzugeben, dass zur Freischaltung des Zugriffs auf die im elektronischen Ausweis 103 gespeicherten Nutzerinformationen benötigt wird. Diese Anforderung wird von der Ausweissoftware gesteuert, welche auch die aufgrund der Aufforderung vorgenommene Eingabe des Nutzers erhält. Von der Ausweissoftware wird die Nutzereingabe über den Kartenleser 107 an den elektronischen Ausweis 103 übermittelt. Daraufhin prüft der Mikroprozessor 105 des elektronischen Ausweises 103 das eingegebene Authentisierungsmerkmal und gibt, im Falle einer erfolgreichen Prüfung, den Zugriff auf die Nutzerinformationen im Speicher 104 frei.

Durch Eingabe des Authentisierungsmerkmals gibt der Nutzer des Terminals 109 sein Einverständnis, dass Nutzerinformationen aus dem Ausweis 103 ausgelesen und an die Servereinrichtung 101 übermittelt werden können. In einer Ausführungsform werden mittels der Ausweissoftware alle Nutzerinformationen oder eine vordefinierte Auswahl ausgelesen und an die Servereinrichtung 101 gesendet. Gleichfalls kann vorgesehen sein, dass die Servereinrichtung 101 die zu übertragenden Nutzerinformationselemente spezifiziert. Dies kann beispielsweise in der von der Servereinrichtung 101 gesendeten Anforderung vorgenommen werden.

In einer alternativen Ausgestaltung wird dem Nutzer die Gelegenheit gegeben, die zu übertragenden Nutzerinformationselemente auszuwählen. Hierzu kann die Ausweissoftware beispielsweise die verfügbaren Nutzerinformationselemente auslesen und am Terminal 109 darstellen. Innerhalb der Darstellung kann dem Nutzer Gelegenheit gegeben werden, einzelne Nutzerinformationselemente auszuwählen. Die ausgewählten Nutzerinformationselemente werden dann an die Servereinrichtung 101 übermittelt. Um die Auswahlfunktionen der Ausweissoftware zu aktivieren, kann vorgesehen sein, dass die Servereinrichtung 101 in der übermittelten Anforderung angibt, dass vom Nutzer ausgewählte Nutzerinformationen übermittelt werden sollen.

In Verbindung mit der späteren Verwendung der in der Datenbank 102 gespeicherten Nutzerinformationen nutzt der Besitzer des elektronischen Ausweises 103 vorzugsweise ein mobiles Kommunikationsendgerät 201, das innerhalb eines Kommunikationsnetzwerks 202 mittels einer Kennung adressiert werden kann. In einer Ausgestaltung handelt es sich bei dem Kommunikationsendgerät 201 um ein Mobilfunkendgerät, wie beispielsweise ein Mobiltelefon, ein Smartphone oder dergleichen, und bei der Kennung um eine MSISDN. Die Kennung des Kommunikationsendgeräts 201 wird zur späteren Verwendung zusammen mit den Nutzerinformationen an die Servereinrichtung 101 übermittelt. Hierzu fordert die Ausweissoftware den Nutzer des Terminals 109 dazu auf, die Kennung einzugeben, und steuert die Übermittlung der eingegebenen Kennung an die Servereinrichtung 101. Die Aufforderung zur Eingabe der Kennung kann aufgrund einer entsprechenden Anforderung der Servereinrichtung 101 ergehen.

Der Datenaustausch zwischen der Servereinrichtung 101 und dem Terminal 109 ist vorzugsweise kryptografisch abgesichert. Dabei werden insbesondere die Nutzerinformationen verschlüsselt an die Servereinrichtung 101 übermittelt. Zudem wird die Servereinrichtung 101 vorzugsweise authentifiziert, bevor die Nutzerinformationen übermittelt werden. Dies kann mittels der Ausweissoftware vorgenommen, die beispielsweise eine von der Servereinrichtung 101 übermittelte digitale Signatur mithilfe eines Zertifikats prüft. Diese Prüfung kann gleichfalls auch im elektronischen Ausweis 103 vorgenommen werden. Aufgrund der Prüfung kann etwa der Zugriff auf die Nutzerinformationen blockiert werden, wenn die Authentifizierung der Servereinrichtung 101 fehlschlägt.

Wenn die Servereinrichtung 101 die Nutzerinformationen und die Kennung erhalten hat, speichert sie diese Informationen in Zuordnung zueinander in der Datenbank 102. Sodann können die Nutzerinformationen Diensten bereitgestellt werden, wenn diese von dem Besitzer des elektronischen Ausweises 103 genutzt werden. Hierdurch können die Nutzerinformationen des elektronischen Ausweises bereitgestellt werden, wenn dessen Besitzer beim Zugriff auf den betreffenden Dienst nicht über ein Terminal 109 der zuvor genannten Art verfügt, mit dem die Nutzerinformationen aus dem elektronischen Ausweis ausgelesen und für den Dienst bereitgestellt werden können.

Alternativ oder ergänzend ist es zudem möglich, dass in der Servereinrichtung 101 Nutzerinformationen gespeichert werden, die nicht in einem elektronischen Ausweis 103 eines Nutzers gespeichert sind. Derartige Informationen können beispielsweise von einer staatlichen Stelle oder einem Unternehmen direkt an die Servereinrichtung 101 übermittelt und dann in der Datenbank 102 gespeichert werden. Die Kennung des Kommunikationsendgeräts 102 des Nutzers wird auch in diesem Fall mitgeteilt und in Zuordnung zu den Nutzerinformationen gespeichert, um dem Nutzer zu ermöglichen, die Bereitstellung der Nutzerinformationen mittels seins Kommunikationsendgeräts 102 freizugeben. Dies erfolgt in der gleichen Weise, wie es im Folgenden für den Ausweisbesitzer beschrieben wird.

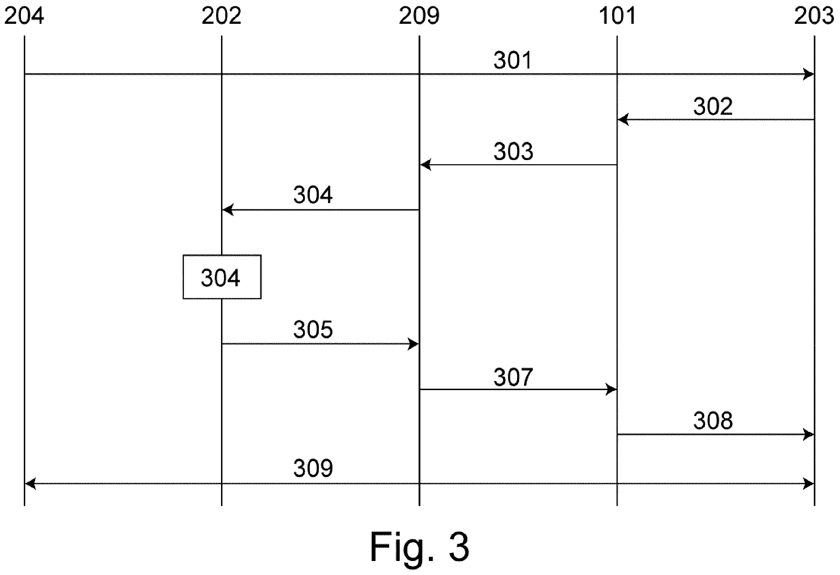

Die Bereitstellung der Nutzerinformationen aus der Datenbank 102 der Servereinrichtung 101 wird nachfolgend unter Bezugnahme auf die Figuren 2 und 3 erläutert. Figur 2 zeigt die bereits beschriebene Servereinrichtung 101 sowie eine weitere Servereinheit 203. Hierbei handelt es sich um eine Servereinrichtung, die einen Dienst, insbesondere einen Webdienst, der zuvor beschriebenen Art bereitstellt, auf den der Besitzer des elektronischen Ausweises 103 in der dargestellten Situation zugreifen will.

Um auf den von der Servereinheit 203 bereitgestellten Dienst zuzugreifen, verwendet der Besitzer in der dargestellten Ausgestaltung eine Computereinrichtung 204, die über das Netzwerk 205 mit der Servereinheit 101 verbunden ist. Die Computereinrichtung 204 kann ein PC, ein Notebook oder ein ähnliches Gerät sein. Das Netzwerk 205 kann dem Netzwerk 108 entsprechen, über welches das Terminal 109 und die Servereinrichtung 101 miteinander verbunden werden. Insbesondere kann es sich bei dem Netzwerk 205 um das Internet handeln. Gleichfalls kann es sich jedoch auch um ein anderes Netzwerk handeln, welches auch nicht mit dem Netzwerk 108 übereinstimmen muss.

Die Servereinrichtung 101, welche die Datenbank 102 mit der Kopie der Nutzerinformationen enthält, ist mit der den Dienst bereitstellenden Servereinheit 103 in der gezeigten Ausführungsform ebenfalls über das Netzwerk 205 verbunden. Gleichfalls kann jedoch eine Verbindung über ein anderes Netzwerk vorgesehen sein. Die Servereinrichtung 101 braucht in der dargestellten Ausgestaltung nicht mit der Computereinrichtung 204 des Besitzers des elektronischen Ausweises verbunden zu sein. Um mit der Servereinrichtung 101 zu kommunizieren, wird das Kommunikationsendgerät 201 verwendet, das über das Kommunikationsnetzwerk 202 mit der Servereinrichtung 101 verbunden ist. In alternativen Ausgestaltungen kann der Ausweisbesitzer das Kommunikationsendgerät 201 auch für den Zugriff auf den Dienst der Servereinheit 203 verwenden. Auf die zusätzliche Computereinrichtung 204 kann in diesem Fall verzichtet werden.

Wie bereits erwähnt, handelt es sich bei dem Kommunikationsendgerät 201 in einer Ausgestaltung um ein mobiles Kommunikationsendgerät des Besitzers des elektronischen Ausweises 103 und bei dem Kommunikationsnetzwerk 202 um ein Mobilfunknetzwerk. Insbesondere kann das Kommunikationsnetzwerk 202 gemäß den Spezifikationen der 3GPP ausgestaltet sein, beispielsweise als GSM-, UMTS- oder LTE-Netzwerk (GSM: Global System for Mobile Communications; UMTS: Universal Mobile Telecommunications System, LTE: Long-Term Evolution).

In das Kommunikationsendgerät 201 ist lösbar eine Identifikationskarte 206 eingesetzt. Die Identifikationskarte 206 ist als eine Chipkarte ausgestaltet, die über einen Speicher 207 und einen mit dem Speicher 207 verbundenen Mikroprozessor 208 verfügt. Sie enthält Daten und weitere Funktionen zur Identifizierung und/oder Authentifizierung der Benutzungsberechtigung des Ausweisbesitzers in dem Kommunikationsnetzwerk 202. Zum Schutz der Daten und Funktionen ist die Identifikationskarte 206 dazu in der Lage, kryptografische Operationen durchzuführen. Zudem verfügt sie über weitere Sicherheitsmerkmale, die unbefugte Manipulationen der in der Identifikationskarte 206 gespeicherten Daten und der in der Identifikationskarte 206 ausgeführten Programme verhindern.

Die Ausgestaltung der Identifikationskarte 206 ist an das Kommunikationsnetzwerk 202 angepasst. Sofern es sich bei diesem um ein GSM-, UMTS- oder LTE-Netzwerk handelt, ist die Identifikationskarte als eine SIM-Karte nach den GSM-Spezifikationen ausgestaltet oder enthält eine USIM-Anwendung nach den UMTS- oder LTE-Spezifikationen.

Die Ausgabe der Identifikationskarte 206 an den Ausweisbesitzer wird beispielsweise von dem Betreiber des Heimat-Netzwerks des Ausweisbesitzers vorgenommen, d.h. von dem Betreiber, mit dem der Ausweisbesitzer ein Abonnement für Mobilfunkelemente vereinbart hat. Nach Ausgabe der Identifikationskarte 206 kann der Betreiber des Heimat-Netzwerks mittels eines OTA-Servers 209 auf eine sichere Weise mit der Identifikationskarte 206 kommunizieren, um beispielsweise Daten oder Programme zu aktualisieren oder zu ergänzen. In der Ausführungsform, die in der Figur 2 gezeigt ist, ist das Kommunikationsnetzwerk 202 auch das Heimat-Netzwerk des Ausweisbesitzers. Das Kommunikationsendgerät 201 des Ausweisbesitzers kann jedoch auch über ein anderes Kommunikationsnetzwerk 202 als das Heimat-Netzwerk mit der Servereinrichtung 101 verbunden werden.

Der OTA-Server 209 ist dazu in der Lage, über einen von dem Kommunikationsnetzwerk 202 bereitgestellten Kommunikationsdienst Nachrichten an das Kommunikationsendgerät 201 zu senden, die im Folgenden auch als OTA-Nachrichten bezeichnet werden. Die OTA-Nachrichten werden innerhalb des Kommunikationsendgeräts 201 automatisch und vorzugsweise transparent an die Identifikationskarte 206 weitergeleitet und können insbesondere Anweisungen zur Ausführung durch die Identifikationskarte 206 bzw. ein in der Identifikationskarte 206 ausgeführtes Programm enthalten. Bei dem Kommunikationsdienst handelt es sich in einer Ausgestaltung um einen Kurznachrichtendienst, insbesondere um den an sich bekannte Short Message Service (SMS).

Zum Schutz gegen unbefugte Zugriffe auf die OTA-Nachrichten werden diese verschlüsselt übertragen und in der Identifikationskarte 206 entschlüsselt. Zudem werden in der Identifikationskarte 206 vorzugsweise Integrität (Nachricht wird unverändert empfangen) und Authentizität (der OTA-Server 209 ist der tatsächliche Absender) einer OTA-Nachricht geprüft. Zur Verschlüsselung der Daten und der Prüfung der Nachrichten können an sich bekannte Verschlüsselungsverfahren und digitale Signaturen eingesetzt werden, die vorzugsweise kartenspezifische kryptografische Schlüssel verwenden, welche im OTA-Server 209 hinterlegt sind.

Die Bereitstellung der in der Datenbank 102 gespeicherten Nutzerinformationen für die Servereinheit 203 im Falle der Nutzung eines von der Servereinheit 203 angebotenen Dienstes durch den Besitzer des elektronischen Ausweises 103 in dem System, welches in der Figur 2 gezeigt ist, wird nachfolgend unter Bezugnahme auf Figur 3 erläutert, in der Schritte für die Bereitstellung schematisch veranschaulicht werden.

Der Aufruf des von der Servereinheit 203 bereitgestellten Dienstes erfolgt in Schritt 301 mittels der Computereinrichtung 204. In einer Ausführungsform geschieht dies über eine Webseite, die von dem Ausweisbesitzer mithilfe der Computereinrichtung 204 aufgerufen wird. Im Zusammenhang mit dem Aufruf des Dienstes wird auch die Kennung des Kommunikationsendgeräts 204 an die Servereinheit 203 gesendet. Dies geschieht in einer Ausgestaltung bereits in dem Schritt 301, wenn der Dienst aufgerufen wird. Insbesondere kann vorgesehen sein, dass die Kennung über die von der Servereinheit 203 bereitgestellt Webseite eingegeben wird. Gleichfalls kann die Kennung in einem weiteren Schritt übermittelt werden, beispielsweise infolge einer Aufforderung der Servereinheit 203 nach dem Start des Dienstes.

Wenn die Servereinheit 203 über die Kennung verfügt, sendet sie in Schritt 302 eine Anforderung zur Übermittlung von Nutzerinformationen des Ausweisbesitzers an den die Servereinrichtung 101. Zur Identifikation des Ausweisbesitzers wird vorzugsweise die erhaltene Kennung verwendet, welche die Servereinheit 203 zusammen mit der Anforderung an die Servereinrichtung 101 sendet. Desweiteren kann die Anforderung in einer Ausgestaltung Angaben über die gewünschten Elemente der Nutzerinformationen enthalten, die übermittelt werden sollen. Auf diese Weise brauchen nur die benötigten Informationen bereitgestellt werden, wodurch der Datenschutz verbessert wird. Nach Erhalt der Anforderung sendet die Servereinrichtung 101 die angeforderten Nutzerinformationen jedoch zunächst nicht ab, sondern erst, wenn eine Zustimmung des Ausweisbesitzers zur Übertragung der Nutzerinformationen vorliegt, welche der Ausweisbesitzer mittels Kommunikationsendgeräts 201 geben kann.

Um die Zustimmung des Ausweisbesitzers einzuholen, wird in einer Ausführungsform eine OTA-Nachricht an das Kommunikationsendgerät 201 des Ausweisbesitzers gesendet. Hierzu sendet die Servereinrichtung 101 in Schritt 303 eine Freigabeanforderung zur Übermittlung einer entsprechenden OTA-Nachricht an den OTA-Server 209 des Mobilfunkbetreibers. Zusammen mit der Freigabeanforderung wird auch die Kennung des Kommunikationsendgeräts 201 übergeben. Zur Kommunikation mit dem OTA-Server 209 ist die Servereinrichtung 101 mit dem OTA-Server 209 über in der Figur 2 nicht dargestelltes Netzwerk oder eine anderen Verbindung verbunden.

Nach dem Erhalt der Freigabeanforderung sendet der OTA-Server 209 in Schritt 304 die OTA-Nachricht an das Kommunikationsendgerät 201. Hierbei wird die OTA-Nachricht anhand der erhaltenen Kennung an das Kommunikationsendgerät 201 adressiert. Die Kommunikation zwischen der Servereinrichtung 101 und dem OTA-Server 209 ist kryptografisch abgesichert, um zu verhindern, dass unberechtigte Dritte auf den OTA-Server 209 zugreifen.

Die OTA-Nachricht enthält eine Anweisung an das Kommunikationsendgerät 201, eine Information darüber anzuzeigen, dass die Servereinheit 101 Nutzerinformationen angefordert hat. Die Servereinheit 101 wird dabei identifiziert. Vorzugsweise wird zudem angegeben, welche Elemente der Nutzerinformationen angefordert worden sind. Desweiteren enthält die OTA-Nachricht Instruktionen, dass eine Zustimmung oder ggf. eine Ablehnung des Nutzers zur Bereitstellung der Nutzerinformationen eingeholt und der Servereinrichtung 101 bzw. dem OTA-Server 209 mitgeteilt werden soll.

Nach Erhalt der OTA-Nachricht in dem Kommunikationsendgerät 201 wird diese, wie zuvor erläutert, an die Identifikationskarte 206 weitergeleitet und dort ausgewertet. Dann werden in Schritt 305 die zuvor genannten Informationen an einer Anzeigeeinrichtung des Kommunikationsendgeräts 201 angezeigt, und der Nutzer des Kommunikationsendgeräts 201, d.h. der Ausweisbesitzer, wird aufgefordert, der Bereitstellung der Nutzerinformationen zuzustimmen oder diese abzulehnen. In einer weiteren Ausgestaltung kann der Nutzer eine Auswahl aus den angeforderten Nutzerdaten treffen und eine Zustimmung für alle oder lediglich für einen Teil der angeforderten Nutzerdaten geben. Die Zustimmung oder Ablehnung kann über entsprechende Eingaben an dem Kommunikationsendgerät 201 vorgenommen werden. Die Darstellung der Informationen wird von der Identifikationskarte 206 gesteuert, die zu diesem Zweck auf die entsprechenden Funktionen des Kommunikationsendgeräts 201 zugreift. Die Eingaben des Nutzers werden ebenfalls an die Identifikationskarte 206 übermittelt und von dieser ausgewertet.

Im Falle einer Ablehnung, die in Figur 3 nicht dargestellt ist, erzeugt die Identifikationskarte 206 eine entsprechende Antwortnachricht und steuert die Übermittlung der Antwortnachricht an den OTA-Server 209. Der OTA-Server 209 leitet die Ablehnung an die Servereinrichtung 101 weiter. Die Servereinrichtung 101 blockiert daraufhin die Bereitstellung von Nutzerinformationen für die Servereinheit 203. Gleichfalls oder alternativ kann vorgesehen sein, dass die Bereitstellung der Nutzerinformationen für die Servereinheit 203 blockiert wird, wenn innerhalb eines vorgegebenen Zeitintervalls nach der Absendung der Anforderung an den OTA-Server 209 keine Antwort erhalten worden ist. In diesem Fall ist es nicht zwingend erforderlich eine Antwortnachricht zu übermitteln, wenn die Bereitstellung der Nutzerinformationen abgelehnt werden soll.

Wenn der Benutzer der Bereitstellung der Nutzerinformationen vollständig oder teilweise zustimmt, wird er dazu aufgefordert, ein Authentisierungsmerkmal an dem Kommunikationsendgerät 201 einzugeben. Die Aufforderung wird vorzugsweise von der Identifikationskarte 206 initiiert, welche auch die Prüfung des Authentisierungsmerkmals vornimmt. In einer Ausgestaltung handelt es sich bei dem Authentisierungsmerkmal um eine PIN, die zum Zwecke der Prüfung in sicherer Weise in der Identifikationskarte 206 gespeichert ist. Dabei kann dieselbe PIN verwendet werden, die auch für Zugriffe auf den elektronischen Ausweis 103 verwendet wird, oder es kann eine andere PIN eingesetzt werden. Die Absicherung der Zustimmung durch das Authentisierungsmerkmal stellt sicher, dass kein Unbefugter mittels des Kommunikationsendgeräts 201 des Ausweisbesitzers eine Zustimmung zur Bereitstellung von Nutzerinformationen geben kann. Eine hohe Absicherung gegenüber Manipulationen wird dadurch erreicht, dass das Authentisierungsmerkmal in der sicheren Identifikationskarte 206 des Kommunikationsendgeräts 201 geprüft wird.

Wenn das Authentisierungsmerkmal in der Identifikationskarte 206 erfolgreich geprüft worden ist, erzeugt die Identifikationskarte 206 eine Freigabemeldung mit einer Angabe der Zustimmung. Eine Antwortnachricht mit der Freigabemeldung wird dann in dem Schritt 306 an den OTA-Server 209 gesendet. Im Falle einer teilweisen Zustimmung in Bezug auf einen Teil der angeforderten Nutzerdaten wird in der Freigabemeldung angegeben, für welche Nutzerdaten eine Zustimmung gegeben worden ist. Das Absenden der Freigabemeldung geschieht in dem Kommunikationsendgerät 201 vorzugsweise transparent. Der OTA-Server 209 leitet die Freigabemeldung in dem Schritt 307 an die Servereinrichtung 101 weiter. Die Kommunikation mit dem OTA-Server 209 ist dabei gegen Manipulationen gesichert. Insbesondere wird in dem OTA-Server 209 die Identifikationskarte 206 als Absender der Antwortnachricht authentifiziert.

Wenn das Authentifizierungsmerkmal nicht erfolgreich eingegebenen worden ist, dann kann die Identifikationskarte 206 dem Nutzer einmalig oder mehrmalig die Möglichkeit zur korrigierten Eingabe des Authentisierungsmerkmals geben. Sofern auch die erneut eingegebenen Authentisierungsmerkmal nicht erfolgreich geprüft werden können, wird eine entsprechende Mitteilung in der Identifikationskarte 206 erstellt und über den OTA-Server 209 an die Servereinrichtung 101 übermittelt, die daraufhin die Bereitstellung der Nutzerinformationen blockiert. Ebenfalls wird von dem OTA-Server 209 gemeldet, wenn die Identifikationskarte 206 des Kommunikationsendgeräts 201 des Ausweisbesitzers nicht als Absender der Antwortnachricht authentifiziert werden konnte. Aufgrund einer solchen Meldung blockiert die Servereinrichtung 201 gleichfalls die Bereitstellung der Nutzerinformationen.

Wenn in dem Schritt 307 eine Zustimmung an die Servereinrichtung 101 übermittelt worden ist, sendet die Servereinrichtung 101 die angeforderten und in der Datenbank 102 gespeicherten Nutzerinformationen in Schritt 308 an die Servereinheit 203, welche die Nutzerinformationen angefordert hat. Im Falle einer nur teilweisen Zustimmung werden nur die Nutzerinformationen an die Servereinheit 203 übermittelt, die von dem Nutzer freigegeben worden sind. Nach der Übermittlung der Nutzerinformationen kann der Dienst unter Verwendung der Nutzerinformationen ausgeführt werden. Dies geschieht beispielsweise in Interaktion zwischen der Computereinrichtung 204 des Ausweisbesitzers und der Servereinheit 203, wie in Figur 3 anhand des Schritts 309 schematisch veranschaulicht.

Die zuvor beschriebenen Ausgestaltung erfordert neben der Servereinrichtung 101 einen separaten OTA-Server 209, welcher Anforderung der Servereinrichtung 101 an das Kommunikationsendgerät 201 weiterleitet und Antworten des Kommunikationsendgeräts 201 an die Servereinrichtung weiterleitet. In einer alternativen Ausführungsform sind die zuvor beschriebenen Funktionalitäten des OTA-Servers 209 in der Servereinrichtung 101 integriert. Insbesondere verfügt die Servereinrichtung 101 in dieser Ausführungsform über die kryptografischen Prozesse und Schlüssel, die bei der Kommunikation mit dem Kommunikationsendgerät 201 verwendet werden.

Desweiteren, kann es in einer Ausgestaltung vorgesehen sein, dass das den Dienst bereitstellende Programm nicht, wie zuvor beschrieben, in der Servereinheit 203 ausgeführt wird, sondern in der Computereinrichtung 204 des Ausweisbesitzers. Dies kann beispielsweise der Fall sein, wenn eine Webapplikation von einer Servereinheit 203 zunächst heruntergeladen und dann in der Computereinrichtung 204 ausgeführt wird. In diesem Fall kann das Programm von der Computereinrichtung 204 aus in Schritt 301 die Anforderung zur Übermittlung der Nutzerinformationen an die Servereinrichtung 101 senden. Die Nutzerinformationen werden in Schritt 308 ebenfalls von der Servereinrichtung 101 an die Computereinrichtung 204 übermittelt und dort von dem Programm verwendet. Die Computereinrichtung 204 übernimmt in dieser Ausgestaltung somit die Rolle der Servereinheit 101.

Obwohl die Erfindung in den Zeichnungen und der vorausgegangenen Darstellung im Detail beschrieben wurde, sind die Darstellungen illustrativ bzw. beispielhaft und nicht einschränkend zu verstehen; insbesondere ist die Erfindung nicht auf die erläuterten Ausführungsbeispiele beschränkt. Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen.

In den Patentansprüchen angegebene Bezugszeichen sind nicht als Beschränkungen der eingesetzten Mittel und Schritte anzusehen.

## Patentansprüche

1. Verfahren zum Bereitstellen von Nutzerinformationen eines Nutzers, insbesondere persönlichen Daten eines Nutzers, wie Name, Anschrift, Kommunikationsadressen, biometrische Daten und/oder Steuernummer als Nutzerinformationselemente,
für eine einen Dienst bereitstellende verwendende Einrichtung (203),
wobei
die Nutzerinformationen in einer mit einem Kommunikationsnetz (205) verbundenen Servereinrichtung (101) gespeichert sind,
eine Freigabemeldung von einem innerhalb eines Kommunikationsnetzes (202) mittels einer Rufnummer als Kennung eindeutig adressierbaren mobilen Kommunikationsendgerät (201) des Nutzers über das Kommunikationsnetz (202) an die Servereinrichtung (101) übertragen wird, wobei die Servereinrichtung (101) die Nutzerinformationen aufgrund der Freigabemeldung an die verwendende Einrichtung (203) sendet,
wobei die Nutzerinformationen zur Speicherung von einem elektronischen Ausweis des Nutzers zu der Servereinrichtung (101) übertragen werden,
die Freigabemeldung von dem mobilen Kommunikationsendgerät (201) aufgrund einer von der Servereinrichtung (101) an das mobile Kommunikationsendgerät (201) übertragenen Freigabeanforderung gesendet wird, und
die Freigabeanforderung unter Verwendung der dem mobilen Kommunikationsendgerät (201) im Kommunikationsnetz (202) eindeutig zugeordneten Kennung an das mobile Kommunikationsendgerät (201) übermittelt wird, wobei die Rufnummer als Kennung dazu vorher von der verwendenden Einrichtung (203) an die Servereinrichtung (101) übermittelt wurde.

2. Verfahren nach Anspruch 1, **dadurch gekennzeichnet, dass** im Zusammenhang mit der Übertragung der Nutzerinformationen an die Servereinrichtung (101) eine Auswahl der zu übertragenden Nutzerinformationselemente der Nutzerinformationen erfolgt.

3. Verfahren nach Anspruch 1, **dadurch gekennzeichnet, dass** die von der verwendenden Einrichtung (203) an die Servereinrichtung (101) übermittelte Rufnummer als Kennung vorher vom Nutzer aufgrund einer Aufforderung der verwendenden Einrichtung (203) an der verwendeten Einrichtung bereitgestellt wurde.

4. Verfahren nach einem der Ansprüche 1 bis 3, **dadurch gekennzeichnet, dass** in der Servereinrichtung (101) in Verbindung mit den Nutzerinformationen die dem mobilen Kommunikationsendgerät (201) in dem Kommunikationsnetz (202) eindeutig zugeordnete Rufnummer als Kennung gespeichert wird.

5. Verfahren nach einem der Ansprüche 1 bis 4, **dadurch gekennzeichnet, dass** die Freigabemeldung in einer gesicherten Identifikationskarte (206) erstellt wird, die lösbar in das mobile Kommunikationsendgerät (201) eingesetzt ist.

6. Verfahren nach einem der Ansprüche 1 bis 5, **dadurch gekennzeichnet, dass** die Freigabemeldung in Abhängigkeit von einem Ergebnis einer Prüfung eines Authentisierungsmerkmals übertragen wird, welches der Nutzer an dem mobilen Kommunikationsendgerät (201) eingibt.

7. Verfahren nach einem der Ansprüche 1 bis 6, **dadurch gekennzeichnet, dass** auf den von der verwendenden Einrichtung (203) bereitgestellten Dienst mittels einer anderen Nutzereinrichtung (204) als dem die Freigabemeldung übertragenden mobilen Kommunikationsendgerät (201) zugegriffen wird.

8. Servereinrichtung (101), ausgestaltet zum Bereitstellen von Nutzerinformationen eines Nutzers, insbesondere persönlichen Daten eines Nutzers, wie Name, Anschrift, Kommunikationsadressen, biometrische Daten und/oder Steuernummer als Nutzerinformationselemente, für eine einen Dienst bereitstellende verwendende Einrichtung (203), wobei in der mit einem Kommunikationsnetz (205) verbundenen Servereinrichtung (101) die Nutzerinformationen gespeichert sind, wobei die Servereinrichtung (101) dazu ausgestaltet ist,
eine Freigabeanforderung unter der Verwendung der einem mobilen Kommunikationsendgerät (201) im Kommunikationsnetz (205) mittels einer Rufnummer eindeutig zugeordneten Kennung an das mobile Kommunikationsendgerät (201) zu übermitteln,
die Rufnummer als Kennung dazu vorher von der verwendenden Einrichtung (203) an der Servereinrichtung (101) zu empfangen,
eine Freigabemeldung von dem mobilen Kommunikationsendgerät (201) des Nutzers in der Servereinrichtung (101) zu empfangen, welches diese Freigabemeldung aufgrund der Freigabeanforderung versenden,
die Nutzerinformationen zur Speicherung von einem elektronischen Ausweis des Nutzers an der Servereinrichtung (101) zu empfangen und die Nutzerinformationen aufgrund der Freigabemeldung von der Servereinrichtung (101) an die verwendende Einrichtung (203) zu übertragen.

9. System zum Bereitstellen von Nutzerinformationen eines Nutzers, insbesondere persönlichen Daten eines Nutzers, wie Name, Anschrift, Kommunikationsadressen, biometrische Daten und/oder Steuernummer als Nutzerinformationselemente, für eine einen Dienst bereitstellende verwendende Einrichtung (203), umfassend eine Servereinrichtung (101) nach Anspruch 8 und ein mobiles Kommunikationsendgerät (201) eines Nutzers, welches dazu ausgestaltet ist, eine Freigabemeldung zur Übertragung an die Servereinrichtung (101) gemäß einem Verfahren nach einem der Ansprüche 1 bis 7 abzusenden.

10. System nach Anspruch 9, **dadurch gekennzeichnet,**
**dass** das mobile Kommunikationsendgerät (201) eine Identifikationskarte (206) enthält, welche dazu ausgestaltet ist, die Freigabemeldung zu erstellen.

11. System nach einem der Ansprüche 9 bis 11, **dadurch gekennzeichnet,**
**dass** das mobile Kommunikationsendgerät (201), insbesondere die darin enthaltene Identifikationskarte (206), dazu ausgestaltet ist, ein an dem mobilen Kommunikationsendgerät (201) eingegebenes Authentisierungsmerkmal zu empfangen und die Freigabemeldung in Abhängigkeit von einem Ergebnis einer Prüfung des Authentisierungsmerkmals zu erstellen.

## Claims

1. A method for providing user information of a user, in particular personal data of a user, such as the name, the address, communication addresses, biometric data and/or the tax number as user information elements,
for a device providing and using a service (203),
wherein
the user information is stored in a server device (101) connected to a communication network (205),
a clearance message is transmitted from a mobile communication terminal (201) of the user, the mobile communication terminal being unequivocally addressable by means of a call number as identifier within a communication network (202), via the communication network (202) to the server device (101),
wherein
the server device (101) sends the user information on the base of the clearance message to the using device (203),
wherein the user information is transmitted to the server device (101) for storing an electronic identity document of the user,
the mobile communication terminal (201) sends the clearance message on the base of a clearance request transmitted from the server device (101) to the mobile communication terminal (201), and
the clearance request is transmitted to the mobile communication terminal (201) using the identifier that is unequivocally allocated to the mobile communication terminal (201) in the communication network (202), wherein for this purpose the call number as identifier has been previously transmitted from the using device (203) to the server device (101).

2. A method according to claim 1, **characterized in that** in connection with the transmission of the user information to the server device (101) a selection of the user information elements to be transmitted of the user information is made.

3. A method according to claim 1, **characterized in that** the call number as identifier that is transmitted by the using device (203) to the server device (101) has been previously provided by the user at the using device on the base of a request of the using device (203).

4. A method according to one of the claims 1 to 3, **characterized in that** the call number which has been unequivocally allocated to the mobile communication terminal (201) in the communication network (202) will be stored in the server device (101) as identifier in connection with the user information.

5. A method according to one of the claims 1 to 4, **characterized in that** the clearance message is created in a secured identification card (206) which is inserted into the mobile communication terminal (201) in a detachable manner.

6. A method according to one of the claims 1 to 5, **characterized in that** the clearance message will be transmitted in dependence on a result of a check with respect to an authentication attribute which is input into the mobile communication terminal (201) by the user.

7. A method according to one of the claims 1 to 6, **characterized in that** the service provided by the using device (203) will be accessed by another user device (204) than the mobile communication terminal (201) transmitting the clearance message.

8. A server device (101) that is designed for providing user information of a user, in particular personal data of a user, such as the name, the address, communication addresses, biometric data and/or the tax number as user information elements, for a device (203) providing and using a service, wherein the user information is stored in the server device (101) connected to a communication network (205), wherein the server device (101) is designed: to transmit a clearance request to the mobile communication terminal (201) using the identifier that has been unequivocally allocated to a mobile communication terminal (201) in the communication network (205) by means of a call number,
for this purpose to previously receive the call number as identifier from the using device (203) at the server device (101),
to receive a clearance message from the mobile communication terminal (201) of the user in the server device (101), which mobile communication terminal sends this clearance message in response to the clearance request,
to receive the user information at the server device (101) for storing an electronic identity document of the user and
to transmit the user information from the server device (101) to the using device (203) on the base of the clearance message.

9. A system for providing user information of a user, in particular personal data of a user, such as the name, the address, communication addresses, biometric data and/or the tax number as user information elements, for a device (203) providing and using a service, comprising a server device (101) according to claim 8 and a mobile communication terminal (201) of a user which is designed to send a clearance message to be transmitted to the server device (101) according to a method according to one of the claims 1 to 7.

10. A system according to claim 9, **characterized in that** the mobile communication terminal (201) contains an identification card (206) which is designed to create the clearance message.

11. A system according to one of the claims 9 to 10, **characterized in that** the mobile communication terminal (201), in particular the identification card (206) contained therein, is designed to receive an authentication attribute which has been input into the mobile communication terminal (201) and to create the clearance message in dependence on a result of a check of the authentication attribute.

## Revendications

1. Procédé pour fournir des informations d'utilisateur d'un utilisateur, notamment des données personnelles d'un utilisateur, telles que le nom, l'adresse, des adresses de communication, des données biométriques et/ou le code fiscal comme des éléments d'informations d'utilisateur,
pour un dispositif (203) fournissant et utilisant un service,
dans lequel
les informations d'utilisateur sont stockées dans un dispositif serveur (101) relié à un réseau de communication (205),
un message de libération est transmis d'un terminal de communication mobile (201) de l'utilisateur, lequel terminal est adressable sans équivoque par moyen d'un numéro d'appel comme identificateur à l'intérieur d'un réseau de communication (202), via le réseau de communication (202) au dispositif serveur (101),
dans lequel
le dispositif serveur (101) envoie les informations d'utilisateur sur la base du message de libération au dispositif utilisant (203),
les informations d'utilisateur sont transmises au dispositif serveur (101 pour stocker une carte d'identité électronique de l'utilisateur,
le message de libération est envoyé par le terminal de communication mobile (201) sur la base d'une demande de libération transmise du dispositif serveur (101) au terminal de communication mobile (201), et
la demande de libération est transmise au terminal de communication mobile (201) en utilisant l'identificateur qui est attribué sans équivoque au terminal de communication mobile (201) dans le réseau de communication (202), à quelle fin le numéro d'appel en tant que l'identificateur a été transmis avant du dispositif utilisant (203) au dispositif serveur (101).

2. Procédé selon la revendication 1, **caractérisé en ce que** dans le cadre de la transmission des informations d'utilisateur au dispositif serveur (101) une sélection des éléments d'informations d'utilisateur à transmettre des informations d'utilisateur est effectuée.

3. Procédé selon la revendication 1, **caractérisé en ce que** le numéro d'appel en tant que l'identificateur, qui a été transmis par le dispositif utilisant (203) au dispositif serveur (101), a été fourni avant par l'utilisateur dans le dispositif utilisant (203) sur la base d'une demande du dispositif utilisant (203).

4. Procédé selon l'une des revendications 1 à 3, **caractérisé en ce que** le numéro d'appel, qui a été attribué sans équivoque au terminal de communication mobile (201) dans le réseau de communication (202), est stocké comme identificateur dans le dispositif serveur (101) en liaison avec les informations d'utilisateur.

5. Procédé selon l'une des revendications 1 à 4, **caractérisé en ce que** le message de libération est créé dans une carte d'identification sécurisée (206), qui est insérée dans le terminal de communication mobile (201) de manière amovible.

6. Procédé selon l'une des revendications 1 à 5, **caractérisé en ce que** le message de libération est transmis en fonction d'un résultat d'une vérification d'un élément d'authentification, que l'utilisateur entre dans le terminal de communication mobile (201).

7. Procédé selon l'une des revendications 1 à 6, **caractérisé en ce que** le service fourni par le dispositif utilisant (203) est accédé par moyen d'un autre dispositif d'utilisateur que le terminal de communication mobile (201) transmettant le message de libération.

8. Dispositif serveur (101), qui est configuré pour fournir des informations d'utilisateur d'un utilisateur, notamment des données personnelles d'un utilisateur, telles que le nom, l'adresse, des adresses de communication, des données biométriques et/ou le code fiscal comme des éléments d'informations d'utilisateur pour un dispositif (203) fournissant et utilisant un service, dans lequel les informations d'utilisateur sont stockées dans le dispositif serveur (101) relié à un réseau de communication (205), le dispositif serveur (101) étant configuré pour:
transmettre une demande de libération au terminal de communication mobile (201) en utilisant l'identificateur attribué sans équivoque à un terminal de communication mobile (201) dans le réseau de communication (205) par moyen d'un numéro d'appel,
recevoir avant, à cette fin, le numéro d'appel en tant que l'identificateur du dispositif utilisant (203) au dispositif serveur (101),
recevoir un message de libération du terminal de communication mobile (201) de l'utilisateur dans le dispositif serveur (101), lequel terminal de communication mobile (201) envoie ce message de libération sur la base de la demande de libération,
recevoir les informations d'utilisateur dans le dispositif serveur (101) pour stocker une carte d'identité électronique de l'utilisateur, et
transmettre les informations d'utilisateur du dispositif serveur (101)au dispositif utilisant (203) sur la base du message de libération.

9. Système pour fournir des informations d'utilisateur d'un utilisateur, notamment des données personnelles d'un utilisateur, telles que le nom, l'adresse, des adresses de communication, des données biométriques et/ou le code fiscal comme des éléments d'informations d'utilisateur pour un dispositif (203) fournissant et utilisant un service, comprenant un dispositif serveur (101) selon la revendication 8 et un terminal de communication mobile (201) d'un utilisateur, qui est configuré pour envoyer un message de libération à transmettre au dispositif serveur (101) selon un procédé selon l'une des revendications 1 à 7.

10. Système selon la revendication 9, **caractérisé en ce que** le terminal de communication mobile (201) contient une carte d'identification (206), qui est configurée pour créer le message de libération.

11. Système selon l'une des revendications 9 à 10, **caractérisé en ce que** le terminal de communication mobile (201), notamment la carte d'identification (206) contenue dans celui-ci, est configuré pour recevoir un élément d'authentification, qui a été entré dans le terminal de communication mobile (201), et pour créer le message de libération en fonction d'un résultat d'une vérification de l'élément d'authentification.
